# EUROPEAN PATENT APPLICATION

(11) **EP 1 537 833 A2**
(43) Date of publication of application: **08.06.2005**
(21) Application number: 04257460.8
(22) Date of filing: 01.12.2004
(51) Int. Cl.: A61C 5/12

(54) **Device and system for separation and matrix retention and adaptation during dental restoration**

(30) Priority: 01.12.2003 US 725295; 30.11.2004 US 904812
(71) Applicant: Kerrhawe SA, 6934 Bioggio (CH)
(72) Inventor: Kilcher, Beat, 6935 Brosco Luganese (CH); DaRold, Marco, 6951 Odogno (CH); Boscherini-Da Silva, Valerie, 6963 Pregassona (CH)
(74) Representative: Findlay, Alice Rosemary

(57) **Abstract**

A device for interproximal separation and matrix band adaptation and retention for use in a dental restoration procedure. The device includes a pair of integral wedge elements and a pair of cushion elements that together achieve simultaneous separation, adaptation and retention. A system is also provided including the device and a matrix band. A method of preparing a tooth for restoration is also provided that includes placement of the matrix band and positioning of the device to adapt the matrix band to a tooth to be prepared and retain it in its properly adapted position while simultaneously separating the tooth to be restored from an adjacent tooth.

## Description

This invention relates to a matrix band retention device for separating adjacent teeth and holding a matrix band in proper placement during a dental restoration procedure, a system that includes the device, and a method of preparing a tooth for restoration using the system.

When a patient develops caries in a tooth, the dental practitioner removes the infected portion of the tooth, prepares the tooth for restoration, and then restores the tooth by depositing a filling material into the tooth cavity preparation. To prepare the tooth for the filling, a matrix band is typically placed against the side of the tooth to approximately define the desired shape for the restored tooth, and as a means to prevent overflow of the filling material beyond the tooth boundary. The matrix band typically comprises a flexible metallic or plastic strip that can be bent around the tooth being restored. If the matrix band is not properly adapted to the tooth contour, and if it is not retained properly in place throughout the restoration procedure, then too much or too little filling material may be deposited in the tooth cavity preparation, and the filling material may flow out of the tooth cavity preparation, thereby distorting the configuration of the restored tooth and creating costly finishing and polishing procedures to correct the distorted restoration.

To place the matrix band into the desired position, particularly for proximal restorations, it is often necessary to separate the teeth by placing small dental wedges in the interproximal space between the teeth, and while the wedges press the matrix band to the proximal surface of the tooth, they are not effective in pressing the matrix band to the other tooth surfaces where the matrix band bends around the tooth, i.e., to the facial and lingual surfaces close to the line angle. In addition, the wedges are subject to slipping from their position, which causes movement of the matrix band. Matrix band retainers have also been used, with or without additional dental wedges. These conventional matrix band retainers have a generally ring-shaped body with a pair of tines extending perpendicularly downward from the ends of the ring-shaped body such that the tines are adjacent the interproximal space for adapting the ends of the matrix band to the tooth surfaces and retaining the matrix band in that position during the restoration procedure. However, many of these retainers do not provide a firm and complete adaptation of the matrix band and many are subject to slipping out of position. Also, tensioning instruments, such as forceps, are generally used to engage the ends of the ring-shaped body to place the tines in the desired position. While numerous matrix band retainers have been developed, many require a special pair of forceps designed specifically for that matrix band retainer, and many are difficult to manipulate. There is currently no matrix band retaining device or system that is easy to manipulate, that is effective to both separate adjacent teeth and adapt and retain the matrix band in an efficient and reliable manner, and that may be operated using any of the many forceps available on the market.

The present invention provides a device that achieves interproximal separation as well as matrix retention and adaptation during a dental restoration. To this end and in the preferred embodiment, a body member having a pair of spaced apart ends is provided with a pair of tines that extend downwardly from the ends to be positioned adjacent the interproximal space between the tooth to be restored and an adjacent tooth. A wedge element is integral with each tine and extends inwardly toward the wedge element of the other tine, such that upon placement of the body member in the oral cavity, the wedge elements are capable of being wedged between the adjacent teeth in the interproximal space, thereby achieving separation. Additionally, the wedge elements adapt the matrix band to the proximal surface of the tooth to be restored. A cushion element is positioned about and engageable with each of the tines between the wedge element and the end of the body member. When the body member is placed in the oral cavity, with the wedge elements wedged into the interproximal space, the cushion elements adapt the ends of the matrix band to the tooth contour, i.e., from the proximal tooth surface to the facial and lingual tooth surfaces and retain the band in place softly, yet firmly, such that the matrix band is held in a stable position throughout the restoration procedure. In an exemplary embodiment, the device includes U-shaped grooves formed in the top surface of the ends of the body member and extending downwardly into the tines in general alignment with the wedge elements. The grooves are compatible with numerous available tensioning instruments, and upon manipulation of the body member, torque is avoided during placement of the device in the oral cavity, thereby making the device easy to use and manipulate.

The present invention further provides a system for separation and matrix band retention for use during a dental restoration, the system including at least one matrix band, a matrix retention device having the body member with tines and inwardly extending wedge elements, and at least one pair of cushion elements for positioning on the tines of the retention device. There is also disclosed a method for preparing a tooth for a restoration, the method including providing a device having the body member with tines and inwardly extending wedges, and having the cushion elements placed on the tines, then placing a matrix band in the interproximal space between the tooth to be restored and an adjacent tooth. The tines of a tensioning instrument are then inserted into the grooves of the retention device and the tensioning instrument is manipulated to push the spaced apart ends further apart. When the body member is positioned in an appropriate place in the oral cavity, the tensioning instrument is released to bring the spaced apart ends back toward each other to insert the wedge elements into the interproximal space between the matrix band and the adjacent tooth to press the matrix band to the proximal surface of the tooth to be restored, and also to press the cushion elements against the ends of the matrix band to adapt them around the tooth toward and against the facial and lingual surfaces. In another exemplary embodiment, the cushion elements comprise a microporous plastic that is capable of absorbing fluids around the tooth to be restored, and the cushion elements are removable and replaceable.

The invention will now be further described by way of example with reference to the accompanying drawings in which:

FIG. 1 is a perspective view of a portion of an oral cavity including a tooth to be restored and an adjacent tooth.

FIG. 2 is a perspective view of a portion of the oral cavity of FIG. 1 depicting placement of a matrix band.

FIG. 3 is a perspective view of a device of the present invention.

FIG. 4 is a perspective view of the device of the present invention depicted in FIG. 3 being manipulated by a tensioning instrument.

FIG. 5 is a perspective view depicting placement of the device of FIG. 3 in the oral cavity of FIG. 2.

FIG. 6 is a top view depicting the device of FIG. 3 placed in the oral cavity of FIG. 2 after release by the tensioning instrument and prior to restoring the tooth to be treated.

FIG. 7 is a top view depicting the retention of the matrix band by the device of FIG. 3 during restoration of the tooth.

FIG. 8 is a cross-sectional view taken along line 8-8 of FIG. 6 depicting the intended placement for the device of the present invention in the oral cavity.

FIG. 9 is a cross-sectional view taken along line 9-9 of FIG. 7 depicting the placement of the device of the present invention in the oral cavity.

FIG. 10 is a cross-sectional view depicting removal of the matrix band after restoration of the tooth.

FIG. 11 is a perspective view of an alternative embodiment of the device of the present invention.

FIG. 11A is a perspective view of an alternative embodiment of a cushion element for the device of the present invention.

FIG. 12 is a top view of the alternative embodiment of the device shown in FIG. 11 in the oral cavity.

FIG. 13 is a side view the device of the present invention depicted in FIG. 3.

FIG. 14 is a side view of an alternative embodiment of a device of the present invention.

FIG. 15 is a side view of another alternative embodiment of a device of the present invention.

The present invention at least in the preferred embodiments provides a separation and matrix band retention device that is simultaneously effective to both separate a tooth to be restored from its adjacent tooth and to adapt and retain a matrix band against the tooth contour throughout the restoration procedure in a manner that is comfortable to the patient and yet firm so as to prevent slipping of the device and the matrix band during the procedure. The device of the present invention is easy to manipulate and may be used with many of the currently available tensioning instruments on the market. The present invention further provides a system that includes the device, as well as a method of preparing a tooth to be restored utilizing the system. The present invention may be best understood with reference to the drawings, in which like numerals are used to refer to like parts throughout.

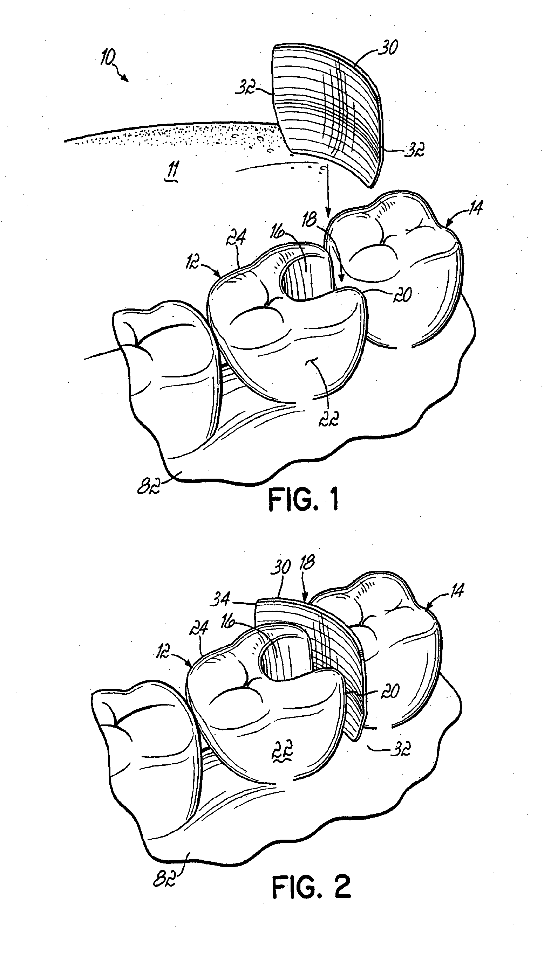

FIG. 1 depicts in perspective view a relevant portion of an oral cavity 10 that includes adjacent teeth 12 and 14, specifically tooth to be restored 12 and its adjacent tooth 14. The tooth to be restored 12 has been prepared by removing infected material to thereby create a cavity, or small hole, to be filled with restorative material (not shown). As shown, the prepared cavity to be filled 16 is located so as to be exposed to the interproximal space 18 between tooth 12 and adjacent tooth 14. The prepared cavity shown may also be referred to as a proximal box. The tooth to be restored 12 includes a proximal surface 20 facing the interproximal space 18, a facial surface 22 and a lingual surface 24. Facial surface 22 may be a buccal surface, which refers to a tooth surface that faces the cheek, and thus this term is used in reference to posterior teeth, i.e., the teeth in the back of the mouth. Tooth 12 in FIG. 1 is a molar, which is a posterior tooth, and thus, facial surface 22 is a buccal surface. Similarly, the facial surface 22 may be a labial surface (not shown), which refers to a tooth surface that faces the lip, and thus this term is used in reference to anterior teeth, i.e., the teeth in the front of the mouth. The lingual surface 24 refers to a tooth surface that faces the tongue 11, and thus this term is used in reference to both anterior and posterior teeth. It may therefore be understood that although the figures are depicting a mesial proximal surface restoration on the second molar, the present invention is applicable to restorations for any tooth surface, and in particular, any proximal surface, for any tooth in the mouth.

FIG. 1 further depicts a matrix band 20, which typically comprises a flexible metallic or plastic strip, that is used to form a tooth boundary where a portion of a tooth surface has been removed during removal of the infected portion of the tooth 12. Thus, as indicated by the arrow in FIG. 1, matrix band 30 is intended to be placed in the interproximal space 18 to form a boundary at the proximal surface 20 to close off the prepared cavity 16. After filling the prepared cavity 16 with a restorative material, the proximal surface 20 of tooth 12 will be restored, such that the matrix band 30 can then be removed. In order for the tooth boundary to be properly restored, it is important that the matrix band 30 be held firmly in place in the interproximal space 18 against the tooth contour without slipping therefrom to ensure that the restored boundary is not distorted.

FIG. 2 further depicts the relevant portion of the oral cavity 10 of FIG. 1 with the matrix band 30 inserted into the interproximal space 18. The majority of the matrix band 30 resides in the interproximal space 18, but end 32 extends outwardly from the interproximal space 18 in the facial, i.e., buccal/labial, direction and end 34 extends outwardly from the interproximal space 18 in the lingual direction. As shown in FIG. 2, matrix band 30 is not firmly retained against the proximal surface 20 such that a distorted restoration would likely result. Advantageously, the ends 32, 34 should be wrapped around the tooth contour such that end 32 is adapted toward and against the facial surface 22 of the tooth to be restored 12 and end 34 is adapted toward and against the lingual surface 24 of tooth 12. When adapted to surround the tooth contour in a manner that presses the matrix band 30 firmly against the proximal surface 20, facial surface 22 and lingual surface 24, a properly shaped restoration may be achieved.

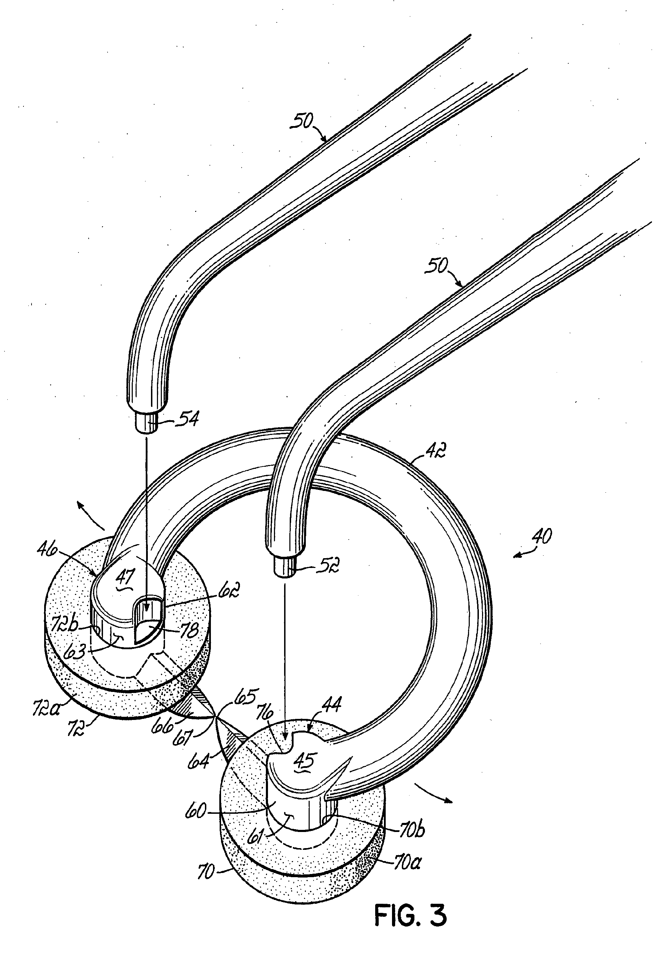

FIG. 3 depicts in perspective view a device 40 of the present invention suitable for use in adapting and retaining matrix band 30 around and against the tooth to be restored 12. Device 40 also simultaneously achieves separation between the tooth to be restored 12 and adjacent tooth 14. Device 40 has a body member 42 terminating in a pair of spaced part ends 44, 46. Advantageously, body member 42 is flexible and generally ring-shaped, as depicted. However, the present invention contemplates non-ring-shaped body members as well as non-flexible body members. While the ring-shape is shown as generally circular, it may be understood that a more square or rectangular ring-shape would also be suitable. In one embodiment, the body member 42 is made of plastic material or metal or any other suitable material that has sufficient flexibility to allow the body member 42 to be manipulated, such as by forceps or other tensioning instrument 50, so as to spread the spaced apart ends 44, 46 further apart, as indicated by the arrows, to allow placement of the device 40 in the oral cavity 10 of FIG. 2. Exemplary materials include polyetheretherketone, polyetherimide, polyphenylsulfone and carbon fiber-reinforced polyetheretherketone. In another embodiment, the body member 42 is a flexible metal or long fiber-reinforced flexible plastic, in order to reduce the dimensions of the body member and to be less cumbersome, while the spaced apart ends 44, 46 are made of a different and/or rigid plastic material. Upon release of device 40 by the tensioning instrument 50, the flexibility of the body member 42 will result in the spaced apart ends 44, 46 returning to their original spaced apart position, thereby tightening the body member 42. Thus, as shown in FIG. 3, when not manipulated by the tensioning instrument, spaced apart ends 44, 46 are in a first position that is a tightened resting position.

Extending downwardly from the spaced apart ends 44, 46 are a pair of tines 60, 62. The tines 60, 62 may extend perpendicularly from the body member 42 or may be angled, as desired. The tines 60, 62 are integral with the body member 42, including a single-piece construction or mechanical attachment, such as screws or an adhesive bond. The tines 60, 62 may be the same or a different material than the body member 42. For example, body member 42 may be made of a flexible metal or long fiber-reinforced flexible plastic, while the spaced apart ends 44, 46 and tines 60, 62 are made of a different and/or rigid plastic material. In one embodiment, the spaced apart ends 44, 46 and tines 60, 62 are of single-piece construction and made from a rigid plastic material, and are mechanically or adhesively attached to body member 42, which comprises a flexible material. Extending inwardly from the tines 60, 62 are a pair of wedge elements 64, 66. The wedge elements 64, 66 are integral with the tines 60, 62, and as a result, the use of separate wedges is eliminated. The separate wedges of the prior art were subject to slipping out of place, whereas the integral wedge elements 64, 66 of the present invention are not subject to slippage. Again, the term "integral" contemplates single-piece construction or mechanical attachment, though single-piece construction is preferred due to the stress placed upon the elements that could cause failure in a mechanical bond, such as an adhesive bond. Thus, in one embodiment, the spaced apart ends 44, 46, the tines 60, 62, and the wedge elements 64, 66 are of single-piece construction and made from a rigid plastic material, and are mechanically or adhesively attached to body member 42, which comprises a flexible material.

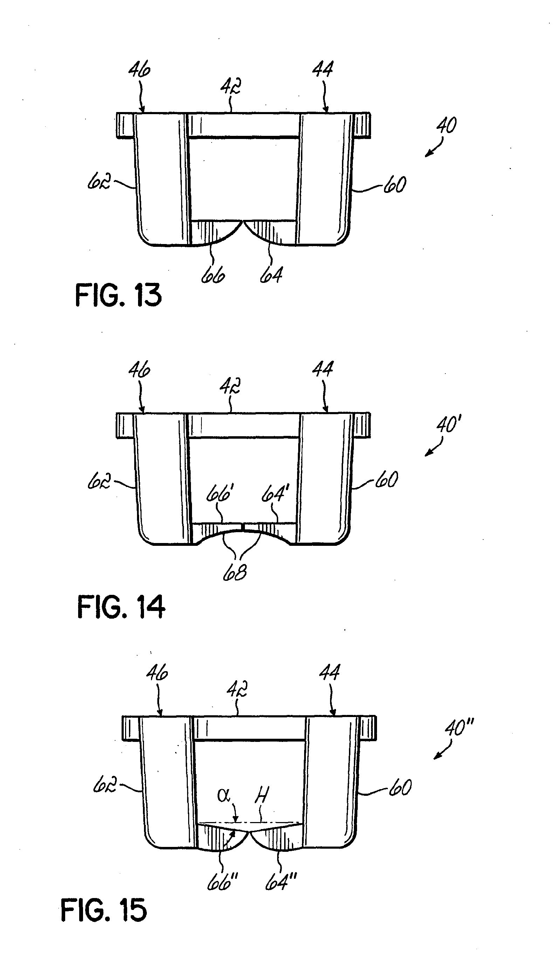

In one embodiment, shown most clearly in side view in FIG. 13, the center axis of wedge element 64 lies in the same plane and is coaxial with the center axis of wedge element 66. These wedge elements 64, 66 are adapted to be wedged between, and thereby separate, the tooth to be restored 12 and adjacent tooth 14. In another embodiment, when the spaced apart ends 44, 46 are in the first position, the respective tips 65, 67 of wedge elements 64, 66 are in contact or near contact.

In another embodiment, depicted in side view in FIG. 14, wedge elements 64', 66' of device 40' each include a concave cut 68 on their underside, i.e., on the bottom surface that faces or contacts the gums. The concave cuts 68 extend from adjacent the respective tines 60, 62 to the respective tips 65, 67. The concave cuts 68 allow better universal proximal access. In other words, the concave cuts better approximate the shape of the gumline to allow the device 40' to be placed adjacent the gumline with the wedge elements 64', 66' being placed to the side of the gums and extending over the gums to meet between the tooth to be restored 12 and adjacent tooth 14.

In yet another embodiment, depicted in side view in FIG. 15, wedge elements 64", 66" of device 40" are slanted such that the center axis of wedge element 64" does not lie in the same plane with the center axis of wedge element 66", but rather, are angled downward, i.e., toward the gumline, from the horizontal plane H. Horizontal plane H is parallel to the plane of the gumline. In one embodiment, the center axis of each wedge element 64", 66" is angled downward at an angle α of 2-25°. In another embodiment, the center axis of each wedge element 64", 66" is angled downward at an angle α of 2-15°. The downward orientation of the wedges 64", 66" enables the device 40" to be positioned above the gumline, with the wedges 64", 66" extending toward the gumline.

Device 40 further includes a pair of cushion elements 70, 72 positioned about and engageable with tines 60, 62, respectively. Cushion element 70 is positioned on tine 60 between the spaced apart end 44 and the wedge element 64. Similarly, cushion element 72 is positioned on tine 62 between spaced apart end 46 and wedge element 66. Cushion elements 70 and 72 each have an outer surface 70a, 72a, respectively, and in inner surface 70b, 72b, respectively. Inner surfaces 70b, 72b engage the outer surfaces 61, 63 of tines 60, 62, respectively. The outer surfaces 70a, 72a of cushion elements 70, 72 will engage the ends 32, 34, respectively, of matrix band 30 upon placement of the device 40 in the oral cavity 10. Advantageously, the outer surfaces 70a, 72a of the cushion elements 70, 72 are such that a portion of each cushion element extends over its respective wedge element 64, 66 one-third to two-thirds the length of the wedge element 64, 66, wherein the length is defined as the distance from the outer surface 61, 63, respectively, of the tines 60, 62 to the respective tip 65, 67. As shown in FIG. 3, the cushion elements 70, 72 are generally ring-shaped for engagement with cylindrically-shaped tines 60, 62.

In an exemplary embodiment of the present invention, the cushion elements 70, 72 comprise a microporous plastic that has the mechanical stiffness necessary for adapting the ends 32, 34 of the matrix band 30 as well as elasticity to provide a soft cushion that is gentle to soft tissue, yet firm enough to hold the matrix band against the tooth contour. The microporous plastic may be high density polyethylene, polytetrafluoroethylene, ultra-high molecular weight polyethylene, nylon-6, polypropylene, polyvinylidene fluoride, polyethersulfone, and combinations thereof. The Porex Porous Products Group, Fairburn, Georgia, offers a line of commercially available porous plastics suitable for the cushion elements 70, 72 in the device 40 of the present invention. The microporous plastic may also be a foamed polyurethane elastomer, such as that provided by GTK Timex Group SA, Rivera, Switzerland. The cushion elements 70, 72 may also comprise a silicone or thermoplastic elastomer having a Shore A hardness in the range of 20-60. Advantageously, the cushion elements 70, 72, for example, the microporous plastic, are capable of fluid absorption in the oral cavity, such that the cushion elements 70, 72 will absorb saliva and/or blood during the restoration procedure. The foamed polyurethane elastomer from GTK Timex Group SA, for example, has a 300-400% water absorption capability with a 25% volume expansion. The cushion elements 70, 72 may also be removable and replaceable, such that device 40 may be used for multiple patients with the cushion elements 70, 72 being replaced for each patient.

The vast majority of the force acting on the tines 60, 62 is distributed to the wedge elements 64, 66, with a much smaller force being distributed to the cushion elements 70, 72. Thus; advantageously, the wedge elements 64, 66 have a significantly higher stiffness than the cushion elements 70, 72. For example, the resiliency ratio of the wedge elements to the cushion elements may be on the order of 1:100 to 1:1000.

In an exemplary embodiment of the present invention, device 40 includes a pair of open grooves 76, 78 formed in spaced apart ends 44, 46, respectively. Advantageously, the open grooves 76, 78 may be V-shaped or U-shaped. The V- or U-shaped open grooves 76, 78 are formed from the top surfaces 45, 47 of the spaced apart ends 44, 46 extending downwardly into the tines 60, 62. The V- or U-shaped grooves are positioned to open inwardly at the outer surfaces 61, 63 of tines 60, 62 in opposition to one another, and are advantageously in alignment with wedge elements 64, 66. When the open grooves 76, 78 are in alignment with the wedge elements 64, 66, torque between the cushion elements 70, 72 and the wedge elements 64, 66 is reduced during manipulation of the body member 42 by a tensioning instrument 50, thereby providing more stability to the device during its insertion into the oral cavity 10. The open grooves are adapted to receive a pair of tines 52, 54 of a tensioning instrument 50 to permit manipulation of the body member 42. By virtue of being an inwardly open V- or U-shape, the grooves 76, 78 are compatible with numerous different tensioning instruments 50 currently available on the market, thereby eliminating the need for a specially designed tensioning instrument.

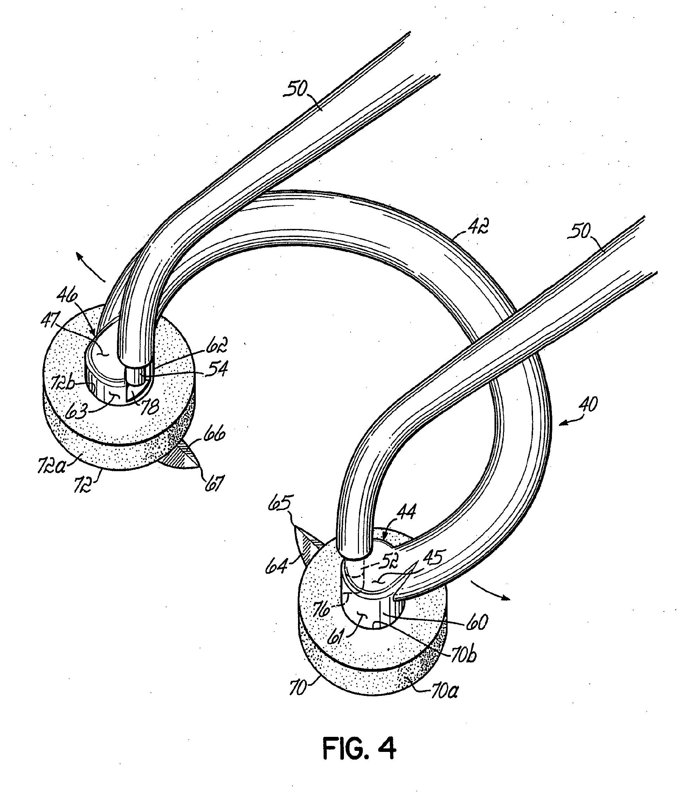

FIG. 4 depicts in perspective view the manipulation of device 40 by tensioning instrument 50. After placement of tines 52, 54 of tensioning instrument 50 into respective V- or U-shaped open grooves 76, 78, the spaced apart ends 44, 46 are pushed further apart, as indicated by the arrows, to a second spaced position greater than the first position, such that the tips 65, 67 of respective wedge elements 64, 66 are not in contact or near contact. The second spaced apart position depicted in FIG. 4 is an unnatural position for the body member 42, such that upon release of the tensioning instrument 50, the body member 42 and spaced apart ends 44, 46 will tend to return to or toward the first position depicted in FIG. 3.

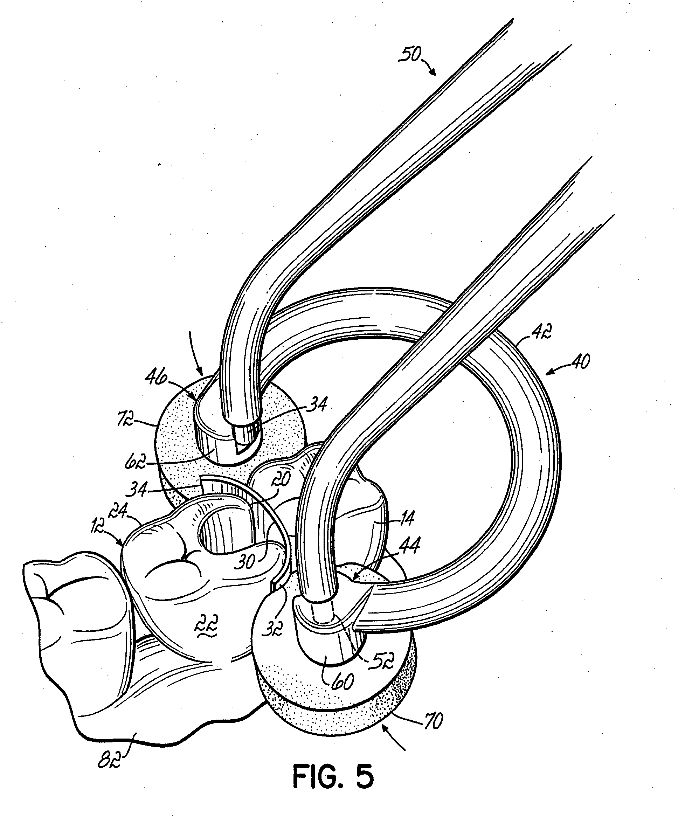

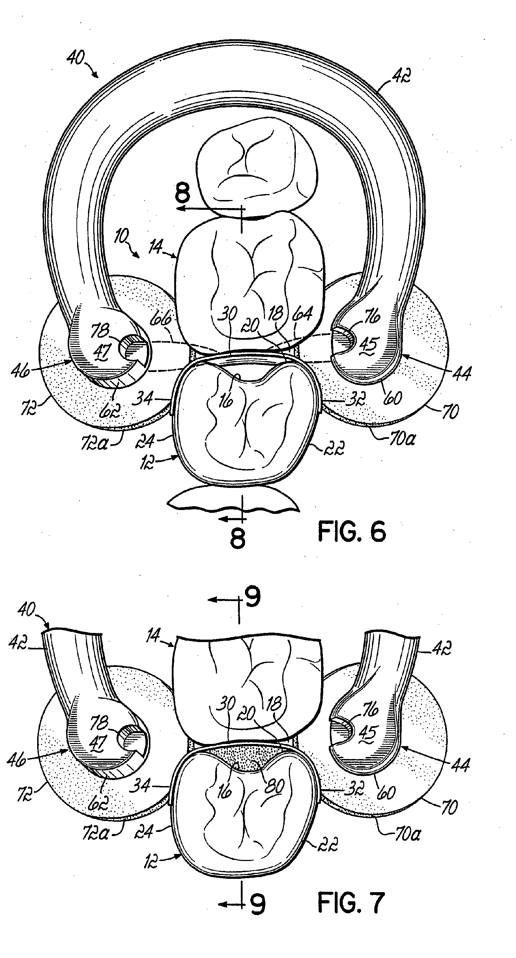

FIG. 5 depicts in perspective view the placement of the device 40 in the oral cavity 10 by tensioning instrument 50. FIG. 6 depicts in top view the position of the device 40 in the oral cavity after the tensioning instrument is released. With the spaced apart ends 44, 46 in the second position, the device 40 may be inserted into the oral cavity 10 so as to place the tines 60, 62 of device 40 adjacent respective opposing sides of the interproximal space 18. Tine 44, wedge 64 and cushion element 70 are positioned adjacent the facial surface 22 of the tooth 12 to be restored with wedge element 64 in alignment with the interproximal space 18 and cushion element 70 contacting end 32 of matrix band 30 to push it toward the facial surface 22. Similarly, tine 62, wedge element 66 and cushion element 72 are positioned adjacent lingual surface 24 with wedge element 66 in alignment with the interproximal space 18 and cushion element 72 in contact with end 34 to push it toward the lingual surface 24. The flexibility of cushion elements 70, 72 allow them to adapt to the tooth contour, thereby causing the matrix band 30 to adapt to the tooth contour. Simultaneously, the integral wedge elements 64, 66 separate the tooth to be prepared 12 and adjacent tooth 14 and hold the matrix band 30 in place at the proximal surface 20 of tooth 12. When the tensioning instrument 50 is released from the device 40, the spaced apart ends 44, 46 are naturally urged inward toward the first resting position, as indicated by the arrows in FIG. 5, thereby firmly pressing the wedge elements 64, 66 into the interproximal space 18 and the cushion elements 70, 72 against the ends 32, 34 of matrix band 30 to press them against the tooth contour. The cushion element 70, 72 likewise press against the tooth contour of adjacent tooth 14, providing a very stable retention of the device 40 and matrix band 30 in position throughout the restoration procedure.

FIG. 7 depicts in top view a portion of device 40 placed in a portion of oral cavity 10 following filling of the prepared cavity 16 with a restorative material 80. The restorative material 80 is confined by the matrix band 30, which is held firmly in place by device 40.

While the figures depict a flexible, generally ring-shaped body member 42, it may be understood that the device 40 of the present invention is not so limited. A non-flexible body member could be utilized that is manipulated by other means to move the spaced apart end 44, 46 toward or away from each other. For example, a screw-adjusted clamp-type body member could be used. Therefore, while a flexible, generally ring-shaped body member is exemplary and is indicative of the current trend in matrix retention devices, the present invention should not be limited regarding the shape or flexibility of the body member.

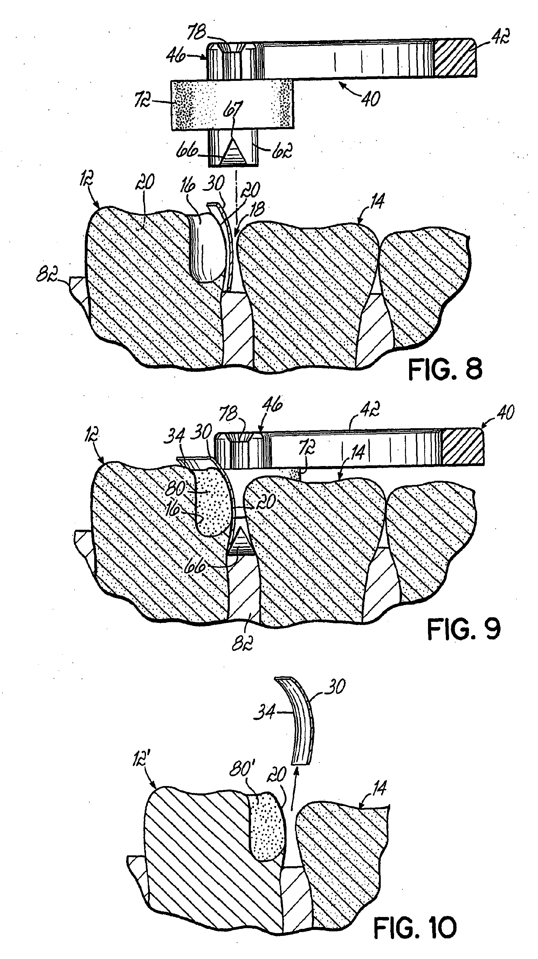

FIGS. 8-9 further depict in cross-section the method of the present invention. The cross-section of FIG. 8 is taken along line 8-8 of FIG. 6, but with the device 40 not yet positioned. As shown in FIG. 8, a matrix band 30 is placed in the interproximal space 18 between the proximal surface 20 of the tooth to be restored 12 and an adjacent tooth 14. The retention device 40 is placed in the oral cavity 10 such that tine 62 and wedge element 66 are generally aligned with the interproximal space 18, as shown generally by the phantom line, and are placed adjacent the lingual surface 24 of tooth 12. The cross-section of FIG. 9 is taken along line 9-9 of FIG. 7. FIG. 9 depicts the proper placement of the device 40 in the oral cavity 10 after removal of the tensioning instrument 50 as cavity 16 is being filled with restorative material 80. Wedge element 66 is wedged in the interproximal space 18 adjacent the gums 82 of the patient. The wedge element 66 is also pressing the matrix band 30 against the proximal surface 20 of tooth 12 while achieving and maintaining separation between tooth 12 and adjacent tooth 14. Above wedge element 66 is the cushion element 72, which is pressing end 34 of matrix band 30 against the lingual surface 24 of tooth 12.

FIG. 10 depicts removal of the matrix band 30 leaving the restored tooth 12' that includes a restoration 80' that accurately defines the tooth boundary at the proximal surface 20.

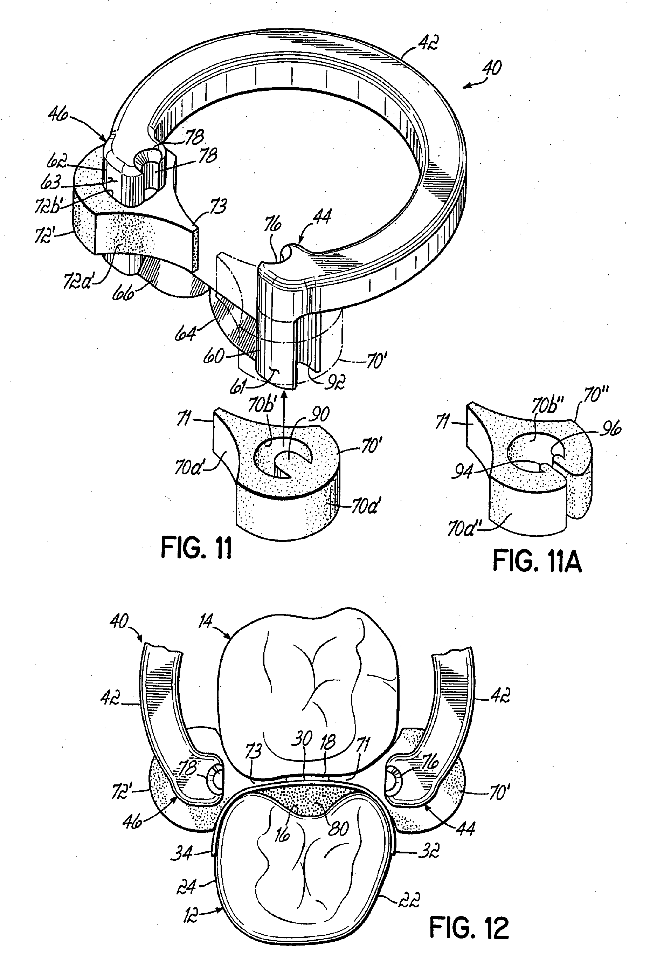

FIGS. 11, 11A and 12 depict in perspective views and top view, respectively, alternative embodiments of the present invention. FIGS. 3-9 depicted ring-shaped cushion elements 70, 72. However, the shape of the cushion elements is not so limited. Device 40 may include cushion elements 70', 72' that are anatomically shaped, for example, as shown in FIGS. 11 and 12. Cushion elements 70', 72' each include a wedge-shaped portion 71, 73, respectively, that extends at least partially over its respective wedge element 64, 66. Advantageously, the wedge-shaped portions 71,73 extend one-third to two-thirds the length of the respective wedge element 64, 66. These wedge-shaped portions 71, 73 are shaped so as to enter the interproximal space 18, as depicted in FIG. 12. As a result, the outer surfaces 70a', 72a' at the wedge-shaped portions 71, 73 further adapt the matrix band 30 to the proximal surface 20 and the ends 32, 34 of the matrix band 30 around the tooth contour toward the facial surface 22 and the lingual surface 24, respectively. Thus, the outer surfaces of the cushion elements may be of any shape desired that is effective in adapting the matrix band to the tooth contour and retaining it firmly in place. Similarly, the inner surfaces of the cushion elements and the outer surfaces of the tines may have any desired shape whereby the cushion elements may be positioned around the tines and in engagement therewith so as to provide a stable arrangement.

FIG. 11 further depicts a positioning hub 90 at the inner surface 70b' of cushion element 70'. A positioning groove 92 is formed at the outer surface 61 of tine 60 and is configured to receive the positioning hub 90 to properly position and stabilize cushion element 70' on tine 60. In one exemplary embodiment, the positioning groove 92 is opposite the U-shaped groove element 76, as depicted in FIG. 11. In another exemplary embodiment (not shown), the positioning groove is coaxial with the U-shaped groove element 76 and, optionally, the two grooves 76, 92 may form a single groove adapted to receive the tine 52 and the positioning hub 90. Cushion elements 70, 72 and/or 72' may each be provided with a positioning hub 90 that mates with a positioning groove 92.

FIG. 11A also depicts an anatomically-shaped cushion element 70" to be positioned about and engageable with tine 60. However, cushion element 70" does not completely surround tine 60, but rather, only partially surrounds tine 60. Cushion element 70" includes a pair of positioning hubs 94, 96 adapted to mate with positioning groove 92 and thereby secure the cushion element 70" to the tine 60. Thus, while the cushion elements 70, 72, 70', 72' are advantageously positioned completely about the tines 60, 62, the present invention further contemplates cushion elements 70" positioned partially about the tines 60, 62. Moreover, though not shown, plural positioning grooves, holes or detents may be provided at the outer surfaces 61, 63 of tines 60, 62 to receive mating positioning hubs on the inner surfaces 70b, 72b, 70b', 70b" of cushion elements 70, 72, 70', 72', 70", or vice versa.

Thus, the present invention includes a device 40 having an integral wedge element and a cushioning element for simultaneously separating a tooth to be restored and its adjacent tooth, and adapting and retaining a matrix band to the contour of the tooth to be restored. The present invention further provides a system for separation and matrix retention and adaptation that includes at least one flexible matrix band and the device of the present invention, with at least one pair of cushion elements. The system may further include additional pairs of cushion elements, such that the cushion elements are removable and replaceable after each patient. The system may also further include a tensioning instrument for manipulating the device. A method of preparing a tooth to be restored, includes providing the device of the present invention, inserting a matrix band into an interproximal space adjacent a tooth to be restored, manipulating the device of the present invention with a tensioning instrument to place the device in the oral cavity and then releasing the tensioning instrument to position the device in a manner that separates the tooth to be restored from its adjacent tooth and adapts and retains the matrix band to the tooth to be restored.

While the present invention has been illustrated by the description of one or more embodiments thereof, and while the embodiments have been described in considerable detail, additional advantages and modifications will readily appear to those skilled in the art.

## Claims

1. A device for placement in an oral cavity during a dental restoration, the device comprising:
a body member having a pair of spaced apart ends;
a pair of tines extending downwardly from the respective ends, the tines each having an outer surface;
a pair of wedge elements integral with the respective tines and extending inwardly therefrom toward one another, each wedge element being capable of being wedged between adjacent teeth; and
a pair of cushion elements each having an outer surface and an inner surface positioned about and engageable with the respective tines between the wedge elements and the spaced apart ends, the outer surfaces of the cushion elements capable of adapting and retaining a matrix band located between two adjacent teeth to a tooth contour of one of said teeth during a restoration procedure.

2. The device of claim 1 further comprising a pair of grooves formed in a top surface of the respective ends and extending downwardly into the tines, the grooves opening inwardly at the outer surfaces of the tines in opposition to one another and in substantial alignment with the wedge elements and adapted to receive a pair of tines of a tensioning instrument.

3. The device of claim 2 wherein the grooves are U-shaped or V-shaped.

4. The device of any one of claims 1-3 wherein the cushion elements comprise a microporous plastic.

5. The device of claim 4 wherein the microporous plastic is selected from the group consisting of: high density polyethylene, polytetrafluoroethylene, ultra-high molecular weight polyethylene, nylon-6, polypropylene, polyvinylidene fluoride and polyethersulfone.

6. The device of claim 4 wherein the microporous plastic comprises a foamed polyurethane elastomer.

7. The device of claim 4 wherein the microporous plastic is capable of fluid absorption in the oral cavity.

8. The device of any of claims 1-3 wherein the cushion elements comprise a silicone elastomer or a thermoplastic elastomer.

9. The device of any preceding claim wherein the cushion elements are removable and replaceable.

10. The device of any preceding claim wherein the outer surfaces of the tines are generally cylindrical, and wherein each of the cushion elements is generally ring-shaped.

11. The device of claim 10 wherein each of the wedge elements has a length from the outer surface of the respective tine inwardly to a tip portion of the wedge element, and a portion of each of the ring-shaped cushion elements extends over a respective wedge element such that the outer surface is positioned one-third to two-thirds the length of the respective wedge element.

12. The device of any preceding claim wherein the outer surface of each tine includes a positioning groove and wherein the inner surface of each cushion element includes a positioning hub configured to be received in the respective positioning groove.

13. The device of claim 12 wherein each groove is positioned at the outer surface of each tine opposite the wedge elements.

14. The device of any preceding claim wherein the outer surfaces of the cushion elements include a wedge-shaped portion extending at least partially over the respective wedge elements.

15. The device of claim 14 wherein each of the wedge elements has a length from the outer surface of the respective tine inwardly to a tip portion of the wedge element, and wherein the wedge-shaped portions extend one-third to two-thirds the length of the respective wedge element.

16. The device of any preceding claim wherein the body member is flexible whereby the spaced apart ends are moveable with respect to each other.

17. The device of claim 16 wherein the body member is generally ring-shaped.

18. The device of claim 16 wherein the body member comprises a flexible metal.

19. The device of claim 16 wherein the body member comprises a flexible, long fiber-reinforced plastic material.

20. The device of either of claims 18 or 19 wherein each of the respective spaced apart ends, tines and wedge elements are of a single-piece construction attached to the body member and comprise a rigid plastic material.

21. The device of any preceding claim wherein each in the pair of wedge elements have a bottom surface having a concave cut extending from adjacent the respective tine to a tip portion.

22. The device of any preceding claim wherein each in the pair of wedge elements are angled downwardly at an angle of 2-25° from a horizontal plane.

23. The device of any preceding claim wherein each in the pair of wedge elements are angled downwardly at an angle of 2-15° from a horizontal plane.

24. A system for use during a dental restoration, the system comprising:
at least one flexible matrix band insertable between adjacent teeth with first second ends extending outwardly; and
a device according to any preceding claim.

25. The system of claim 24 further comprising a tensioning instrument having a pair of tines capable of being received in the respective grooves and capable of pushing the spaced apart ends further apart for insertion of the wedge elements between the adjacent teeth.

26. The system of either of claims 24 or 25 wherein the cushion elements are removable and replaceable, and wherein the system further comprises a plurality of additional cushion elements for replacing the pair of cushion elements.
